(19) Europäisches Patentamt

European Patent Office

Office européen des brevets

(11) EP 0 908 845 B1

(12) **EUROPEAN PATENT SPECIFICATION**

(45) Date of publication and mention
of the grant of the patent:
**03.12.2003 Bulletin 2003/49**

(51) Int Cl.⁷: $G06T\ 3/40$, G06T 5/20

(21) Application number: **98203264.1**

(22) Date of filing: **22.09.1998**

(54) **Image sharpening and re-sampling method**

Verfahren zur Verbesserung der Schärfe und zur Wiederabtastung eines Bildes

Procédé d'accentuation et de re-échantillonage d'image

(84) Designated Contracting States:
**BE DE FR GB**
Designated Extension States:
**AL LT LV MK RO SI**

(30) Priority: **09.10.1997 EP 97203138**

(43) Date of publication of application:
**14.04.1999 Bulletin 1999/15**

(73) Proprietor: **AGFA-GEVAERT
2640 Mortsel (BE)**

(72) Inventors:
• **Meeussen, Dirk
  2640 Mortsel (BE)**
• **Tijgat, Bart
  2640 Mortsel (BE)**

(56) References cited:
**EP-A- 0 396 517        EP-A- 0 696 017
WO-A-90/00780        WO-A-90/16034
US-A- 5 347 590        US-A- 5 410 616
US-A- 5 666 391**

## Description

The present invention relates to digital image processing. The invention more specifically relates to sharpening and re-sampling of medical images.

## State of the art

In several medical imaging techniques, a visible image of an object under examination is generated by means of thermal reproduction techniques such as dry thermal printing.

The sharpness of the reproduced images, especially when they are reproduced on a transparent thermal sensitive medium is not always adequate for medical diagnosis. The images are considered un-sharp or not crispy.

The degree of un-sharpness experienced by the viewer, e.g. the physician or the radiologist may depend on the kind of image that has been reproduced, on the perceptibility of the viewer, on the characteristics of the image acquisition etc.

The un-sharpness (also referred to as smoothing) may be caused by thermal effects that have occurred in the thermal reproduction device such as heat distribution among the thermal elements of the thermal head part of the printer.

It may also be caused by slow temperature increase and decrease of the heating elements in the thermal head.

Although compensation for these effects is often provided, it may still not eliminate all non-uniformities.

Still other causes of un-sharpness may occur.

Furthermore, when images acquired by a digital image acquisition apparatus are reproduced, there is often a need for re-scaling of the pixel matrix.

Images may need to be re-scaled for example because the pixel matrix of the acquired digital image does not match with the pixel matrix provided by a reproducing apparatus by means of which a hard copy of the digital image will be produced.

Also lay-out requirements such as reproduction of a multiplicity of images on a single film (often applied in tomography), may demand for image re-scaling.

The above problems, i.e. sharpening and re-scaling, have been addressed separately in the prior art.

Sharpening techniques are known according to which (a) digital spatial convolution filter(s) is(are) applied to the digital image. These digital spatial convolution filters used for image sharpening do not provide re-sampling nor image scaling.

An example of such a technique is the unsharp masking technique wherein smoothing low pass filters such as mean filters, Gaussian filters etc. are used.

Another example consists of the application of a highpass filter such as the Laplacian or Gaussian filter.

In the prior art also image processing techniques are known which are based on a digital spatial interpolating convolution to be applied to images, e.g. scaled image, for creating intermediate pixels in between the pixels of the original pixel matrix of an image.

An example of such a technique is referred to as high resolution cubic spline interpolation.

However, images often need to be re-scaled in addition to being sharpened.

Application of the prior art methods requires both problems to be tackled separately, i.e. one after the other. The prior art solutions hence are computationally expensive, they demand a lot of processing time and are hence not adapted for use in medical imaging where a physician wants to have a hard copy image as soon as possible after examination in order to make a diagnosis.

## Objects of the invention

It is thus an object of the present invention to provide a method of sharpening and re-scaling an image that can be performed fast and that does not demand a lot of processing time.

It is a further object to provide such a method that can easily be adapted to different kinds of images as well as to the user's taste.

It is still a further object to provide such a method of sharpening and re-scaling that is adapted to the requirements of medical imaging.

Further objects of the invention will become apparent from the description given below.

## Summary of the invention

The objects of the present invention are achieved by a method according to claim 1.

The method of the present invention is applicable to images provided by means of a digital signal representation.

Although the method was specifically developed for application to medical images, it can be applied to all kinds of images that require image sharpening and for which varying image scaling or re-sampling is desired.

The method can be implemented by software as well as by a mixed hardware-software embodiment.

The method provides a simple implementation of a combined image sharpening and image re-sampling technique.

In medical environments such as hospitals, physicians want to be able to make a diagnosis on a hard copy image as soon as possible after an examination.

Care is thus taken to use a fast hard copy system such as the dry imaging system and to use a fast working image processing system such as the processing of the present invention which is computationally less expensive than the prior art techniques. It provides enhanced images in fast and accurate way and is thus very well suited for use in a medical environment.

The method of the present invention does not introduce unwanted artefacts e.g. due to aliasing, overshoots, contouring etc. Consequentially it does not have any negative influence on the diagnosis.

The method of the invention makes use of either a one or a two-dimensional kernel.

When a two-dimensional kernel is used, the image can be filtered in a single pass, whereas the use of one-dimensional kernels implies two passes, one for a first, e.g. horizontal filtering and one for a second, e.g. vertical filtering of a two-dimensional image.

In a preferred embodiment (down-loadable) convolution tables are used so that the image processing characteristics can be easily adapted to different kinds of images or to the taste of the user.

According to the invention the kernel elements are obtained by selecting a first set of kernel values so that a convolution of the image by means of a kernel with said first set of kernel values generates a sharpened image and interpolating between kernel values of the first set.

The interpolation preferably is based on a third order function. Preferably a cubic spline interpolation between the values of the first kernel is used such that a desired interpolation function is approximated.

The desired interpolation function is preferably a sin x /x function.

In order to be able to obtain said approximation, the following constraints must be applied:

- in case of a scaling factor equal to 1/1 the sharpening kernel values need to be used (values of the first kernel),
- the interpolation function must be symmetric around the center point of the kernel,
- the slope in the center point is zero,
- the function is continuous in all points,
- the slope of a spline in the end point of a spline should be equal to the slope in the start point of an adjacent spline.

Other interpolation techniques can be use such as linear interpolation (with triangular function) etc.

However, cubic spline approximation is preferred because it does not introduce undesired effects which could have a negative influence on the diagnosis.

### Brief description of the drawings

The present invention will now be described, by way of example, with reference to the drawings, in which :

Fig. 1 is an overall block diagram illustrating operational elements of a thermal printer wherein the present invention can be applied,

Fig. 2 illustrates the composition and the operation of a signal processing unit wherein the method of the present invention is performed,

Fig. 3 is a graphical representation of a pure sin x / x function and the interpolation points (for half a kernel)

### Detailed description

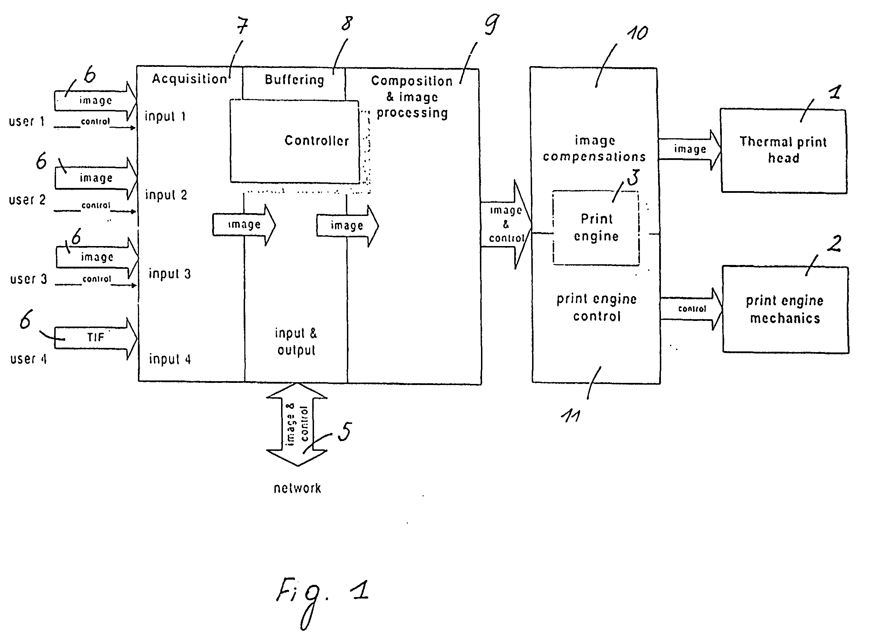

In the block diagram of figure 1 the different operational blocks of a thermal printer for reproducing a medical image provided as a digital signal representation, are shown.

The thermal printer comprises four main blocks: a thermal print head indicated by numeral 1, print engine mechanics indicated by numeral 2, a print engine 3 and a controller 4.

Print engine mechanics 2 provide the movement of the thermal head 1 relative to a reproducing material.

Controller 4 controls the image acquisition, the image composition and'the image processing. In this example controller 4 is a medical gateway controller that accepts different inputs.

An image to be printed can be fed to the medical gateway controller by two ways. Either the digital image representation is fed via network input 5 or via point-to-point inputs 6.

Point-to-point inputs are connections with single external image acquisition apparatus such as CT apparatus, US apparatus etc. In the described example four such inputs are provided, the inputs can take analog or digital image input. The point-to-point inputs are connected to image acquisition section 7 part of medical gateway controller 4.

Images input via acquisition section 7 or via network input 5 are buffered in buffer section 8 and further applied to composition and image processing section 9.

In image processing section 9 a desired lay-out is generated and the image processing according to this invention, i.e. combined scaling and interpolation, is performed.

For this purpose the image is twice convoluted by means of a convolution kernel, the elements of which are determined following the method described furtheron.

For the second convolution the image is rotated by 90 degrees relative to its position when bein convoluted a first time.

The processed image is then applied to the print engine 3.

Print engine 3 comprises an image compensation section 10 and a print engine control section 11.

Compensations such as neighbour compensation performed in image compensation section 10 have been described in e.g. in European patent application-A-627 319.

Also commands necessary for film handling in the printer are generated in print engine control 11.

The image processing in image processing unit 9 is mainly executed by hard-ware. The hardware image processing accelerator circuit is in the following denoted by HIP (hardware image processor).

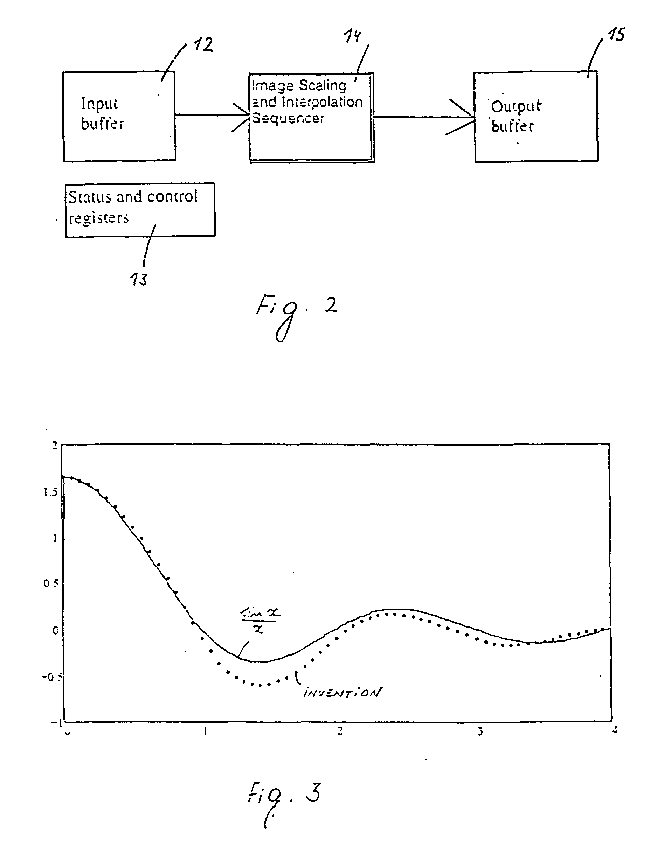

Figure 2 schematically shows the composition of the HIP.

The HIP basically comprises an input line buffer 12, status and control registers 13, an image scaling and interpolation sequencer 14, and an output line buffer 15.

The status and control register 13 and the input buffer 12 and output buffer 15 of the HIP are mapped into the memory map of an embedded computer.

The input and output buffers are organized as first in, first out buffers (FIFO).

The control registers allow the setting of a number of parameters such as the number of pixels per line in a reproduced image, the convolution values, the zoom ratio etc.

The system works on an image line basis, the number of pixels per line (input and output) is programmable.

In sequencer 14 the data stream between the input and the output FIFO (first in, first out) buffers is handled. The sequencer converts data stored in the input FIFO line buffer to a serial pixel stream at the required resolution. The data are then written into the output FIFO line buffer. The ratio between the input and the output clock depends on the interpolation (scaling) factor.

According to the present invention the scaling and interpolation is performed with a single programmable convolution kernel which in this embodiment comprises 8 x 16 values. The distance between each input pixel is divided into 15 subsample points.

The operation of the sequencer is basically as follows. The sequencer is first initialized by filling in the parameters such as line length, zoom ratio, convolution coefficients. The operation of the sequencer is then started. When the external input line buffer is filled, the sequencer will start to read input lines, calculate new pixel values by applying the method of the present invention and store the results in the output buffer. This process continues until the input buffer is empty and the output buffer is filled. This status change can be monitored by the processor.

The sequencer will resume operation as soon as the input buffer us full again and the output buffer is empty. In this way, the interpolation sequence will be ended at the end of the last line of the image when the input buffer isn't filled anymore.

In order to perform the image processing according to the invention, the image is passed twice through the HIP. The first time scaling and interpolation is performed in a first direction, e.g. horizontal direction in the image. During the second time, the image is rotated by 90 degrees and fed to the HIP so as to result in vertical scaling and interpolation.

When the two-dimensional process is split in a horizontal and a vertical pass, a one dimensional convolution vector is required.

In this example the convolution vector comprises 8x16 values that are calculated as follows:

first a set of 8 kernel values is determined that provides image sharpening when being applied to the image, next interpolation between the values of the so-called first set is performed.

The following example will illustrate this method.

The original image vector is $V_{org}$ = (00001000).
The mean smooth vector is:
$V_{smooth}$ = (0.125 0.125 0.125 0.125 0.125 0.125 0.125 0.125)
Factor: k = 0.75
The values defined by the sharpening filter are defined by $V_{sharp}$. Sharpening image vector is then equal to :
$V_{sharp}$ = (-0.094 - 0.094 -0.094 -0.094 1.656 -0.094 -0.094 -0.094)
The interpolation values are obtained by drawing a sin x /x like function through the 8 values by cubic spline approximation.
It is to be noted that because of the symmetry only 4 segments have to be calculated.

* first segment, interval 0 .. 1

$$y1 = a1.x^3 + b1.x^2 + c1.x + d1$$

| | |
|---|---|
| d1 = v0 | value for x = 0 |
| c1 = 0 | slope is 0 for x = 0 |
| a1+b1+c1+d1 = v1 | value for x = 1 |
| 6.1.a1+2.b1 = 0 | bendpoint for x = 1 |

* second segment, interval 1 .. 2

$$y2 = a2.x^3 + b2.x^2 + c2.x + d2$$

| | |
|---|---|
| a2+b2+c2+d2 = v1 | value for x = 1 |
| $3.a1.1^2+2.b1.1+c1 = 3.2.1^2 1+2.b2.1+c2$ | slope of 2 segments equal at x = 1 |
| $a2.2^3+b2.2^2+c2.2+d2 = v2$ | value for x = 2 |
| 6.2.a2+2.b2 = 0 | bendpoint for x = 2 |

* third segment, interval 2 .. 3

$$y3 = a3.x^3 + b3.x^2 + c3.2 + d3 = v2$$

| | |
|---|---|
| $a3.2^3+b3.2^2+c3.2+d3 = v2$ | value for x = 2 |
| $(3.a3.2^2+2.b3.2+c3).A = 3.a2.2^2+2.b2+c2$ | slope of 2 segments equal at x = 2 |
| $a3.3^3+b3.3^2+c3.3+d3 = v3$ | value for x = 3 |
| 6.3.a3+2.b3 = 0 | bendpoint for x = 3 |

* fourth segment, interval 3 .. 4

$$y4 = a4.x^3 + b4.x^2 + c4.x + d4$$

| | |
|---|---|
| $a4.3^3+b4.3^2+c4.3+d4 = v3$ | value for x = 3 |
| $3.a3.3^2+2.b3.3+c3 = 3.a4.3^2+2b4.3+c4$ | slope of 2 seqments equal at x = 3 |
| $a4.4^3+b4.4^2+c4.4+d4 = 0$ | value for x = 4 |
| $3.a4.4^2+2.b4.4+c4 = 0$ | slope is 0 for x = 4 |

* interpolating points for half of the kernel
vo=1.656      v1=-0.094      v2= -0.094      v3=-0.094

| segment 1 | segment 2 | segment 3 | segment 4 |
|---|---|---|---|
| 1.656 | -0.094 | -0.094 | -0.094 |

(continued)

| segment 1 | segment 2 | segment 3 | segment 4 |
|---|---|---|---|
| 1.646 | -0.243 | -0.019 | -0.129 |
| 1.617 | -0.363 | 0.041 | -0.153 |
| 1.569 | -0.456 | 0.087 | -0.167 |
| 1.506 | -0.525 | 0.121 | -0.172 |
| 1.426 | -0.57 | 0.144 | -0.169 |
| 1.333 | -0.594 | 0.156 | -0.16 |
| 1.227 | -0.599 | 0.158 | -0.147 |
| 1.109 | -0.586 | 0.152 | -0.129 |
| 0.981 | -0.558 | 0.138 | -0.109 |
| 0.844 | -0.517 | 0.117 | -0.087 |
| 0.7 | -0.464 | 0.091 | -0.066 |
| 0.549 | -0.402 | 0.06 | -0.045 |
| 0.392 | -0.331 | 0.025 | -0.027 |
| 0.232 | -0.255 | 0.013 | -0.013 |
| 0.07 | -0.176 | 0.053 | 0 |

Figure 3 shows a pure sin x/x function as well as the interpolation points for half of the kernel.(kernel values fo different segments) obtained by applying the method of the present invention.

**Claims**

1. Image processing method for re-sampling and sharpening an image comprising

   - generating a first convolution kernel having elements that upon convolution with said image would generate a sharpened image,
   - generating a second convolution kernel having second kernel elements wherein the generation of the second convolution kernel includes interpolating between the first kernel elements of said first convolution kernel, and
   - convolving said image by means of said second convolution kernel.

2. An image processing method according to claim 1 wherein interpolation is performed by drawing an interpolation function through the elements of said first kernel, said interpolation function being a sin x / x function.

3. An image processing method according to claim 2 wherein interpolation is performed by applying cubic spline approximation of said interpolation function through the elements of said first kernel.

4. An image processing method according to claim 1 wherein said kernel elements are stored in a convolution look up table.

5. An image processing method according to claim 1 wherein said second convolution kernel is a one-dimensional kernel and said image is subjected to a first and a second convolution with said one-dimensional kernel, a second time being rotated by 90 degrees relative to a first time.

6. An image processing method according to any of the preceding claims wherein said'image is a medical image.

## EP 0 908 845 B1

**Patentansprüche**

1. Bildverarbeitungsverfahren zum Neuabtasten und Schärfen eines Bilds, umfassend:

   - Erzeugen eines ersten Faltungskerns mit Elementen, die bei Faltung mit dem Bild ein geschärftes Bild erzeugen würden,
   - Erzeugen eines zweiten Faltungskerns mit zweiten Kernelementen, wobei die Erzeugung des zweiten Faltungskerns das Interpolieren zwischen den ersten Kernelementen des ersten Faltungskerns beinhaltet, und
   - Falten des Bilds mit Hilfe des zweiten Faltungskerns.

2. Bildverarbeitungsverfahren nach Anspruch 1, wobei die Interpolation erfolgt durch Zeichnen einer Interpolationsfunktion durch die Elemente des ersten Kerns, wobei die Interpolationsfunktion eine Funktion sin x/x ist.

3. Bildverarbeitungsverfahren nach Anspruch 2, wobei die Interpolation erfolgt durch Anwenden einer Cubic-Spline-Approximation der Interpolationsfunktion durch die Elemente des ersten Kerns.

4. Bildverarbeitungsverfahren nach Anspruch 1, wobei die Kernelemente in einer Faltungsnachschlagetabelle gespeichert sind.

5. Bildverarbeitungsverfahren nach Anspruch 1, wobei der zweite Faltungskern ein eindimensionaler Kern ist und das Bild einer ersten und einer zweiten Faltung mit dem eindimensionalen Kern unterzogen wird und ein zweites Mal um 90 Grad relativ zu einem ersten Mal gedreht wird.

6. Bildverarbeitungsverfahren nach einem der vorhergehenden Ansprüche, wobei das Bild ein medizinisches Bild ist.

**Revendications**

1. Procédé de traitement d'image pour ré-échantillonner et accentuer une image comprenant

   - la génération d'un premier noyau de convolution ayant des éléments qui lors de la convolution avec ladite image généreraient une image accentuée,
   - la génération d'un deuxième noyau de convolution ayant des deuxièmes éléments de noyau dans lequel la génération du deuxième noyau de convolution comporte l'interpolation entre les premiers éléments de noyau dudit premier noyau de convolution, et
   - la convolution de ladite image au moyen dudit deuxième noyau de convolution.

2. Procédé de traitement d'image conformément à la revendication 1, dans lequel l'interpolation est exécutée en dessinant une fonction d'interpolation pour les éléments dudit premier noyau, ladite fonction d'interpolation étant une fonction sin x/x.

3. Procédé de traitement d'image selon la revendication 2, dans lequel l'interpolation est exécutée en appliquant une approximation par splines cubiques de ladite fonction d'interpolation pour les éléments dudit premier noyau.

4. Procédé de traitement d'image selon la revendication 1, dans lequel lesdits éléments de noyau sont mémorisés dans une table de consultation de convolution.

5. Procédé de traitement d'image selon la revendication 1, dans lequel ledit deuxième noyau de convolution est un noyau unidimensionnel et ladite image est soumise à une première et à une deuxième convolutions avec ledit noyau unidimensionnel, tournée une deuxième fois de 90 degrés par rapport à une première fois.

6. Procédé de traitement d'image selon l'une quelconque des revendications précédentes, dans lequel ladite image est une image médicale.

Fig. 1

EP 0 908 845 B1

Fig. 2

Fig. 3